# EUROPEAN PATENT SPECIFICATION

(11) **EP 2 862 965 B1**
(45) Date of publication and mention of the grant of the patent: **07.09.2016**
(21) Application number: 13825054.3
(22) Date of filing: 20.05.2013
(51) Int. Cl.: D01F 8/14, D01F 8/10, D01F 1/07, D01F 1/10, D01D 5/34, C08J 3/22

(54) **HYDROPHOBIC FLAME RETARDANT FIBRE AND METHOD FOR PREPARING SAME**
HYDROPHOBE FLAMMHEMMENDE FASER UND VERFAHREN ZUR HERSTELLUNG DAVON
FIBRE IGNIFUGE HYDROPHOBE ET SON PROCÉDÉ DE PRÉPARATION

(30) Priority: 01.08.2012 CN 201210270770
(43) Date of publication of application: 22.04.2015
(73) Proprietor: Bosideng Corporation Limited, Changshu, Jiangsu 215532 (CN)
(72) Inventor: QI, Lu, Tianjin 300387 (CN); DING, Zhijia, Changshu Jiangsu 215500 (CN); GAO, Dekang, Changshu Jiangsu 215532 (CN); GAO, Xiaodong, Changshu Jiangsu 215500 (CN)
(74) Representative: Hanna, Peter William Derek
(86) International application number: PCT/CN2013/000589
(87) International publication number: WO 2014/019334

(56) References cited:
- CN-A- 1 668 695
- CN-A- 101 205 639
- CN-A- 102 747 457
- JP-A- 2000 008 225
- US-A1- 2004 110 001
- DATABASE WPI Week 198714 31 December 1987 (1987-12-31) Thomson Scientific, London, GB; AN 1987-097855 XP002738841, & JP S62 45723 A (NIPPON ESTER CO LTD) 27 February 1987 (1987-02-27)
- Yu-Zhong Wang ET AL: "Aryl Polyphosphonates: Useful Halogen-Free Flame retardants for polymers", Materials, 11 October 2010 (2010-10-11), pages 4746-4760, XP055157878, DOI: 10.3390/ma3104746 Retrieved from the Internet: URL:http://www.google.com/url?sa=t&rct=j&q =&esrc=s&source=web&cd=1&ved=0CCIQFjAA&url =http%3A%2F%2Fwww.mdpi.com%2F1996-1944%2F3 %2F10%2F4746%2Fpdf-vor&ei=YmKIVOKFDsHJPKXD gKAD&usg=AFQjCNEBwrjwqAPINhoalfr6JFeoWyKxr Q&bvm=bv.81456516,d.ZWU [retrieved on 2014-12-10]

## Description

### FIELD OF THE INVENTION

The present invention is related to functional chemical fibre technology, especially related to a hydrophobic flame retardant fibre and method for preparing same.

### BACKGROUND OF THE INVENTION

Hydrophobic flame retardant fibre is a kind of functional fibre having hydrophobic and flame retardant functions. Several kinds of hydrophobic flame retardant fibre are disclosed in the prior art, however, the hydrophobic and flame retardant functions of these kinds of fibre are unsatisfactory.

For example, a Chinese patent CN101143923 discloses a kind of water-repellent polyester fibre which is used for waterproof cloth. The preparation method of the water-repellent polyester fibre includes: preparing water-repellent polyester by adding B type additive silicone or dimer acid during the polymer slurry forming process of purified p-phthalic acid and ethylene glycol, and then spinning the water-repellent polyester into water-repellent fibre with a square section by using a spinneret having a square spinning hole. However, this kind of fibre is not flame retardant.

Another Chinese Patent CN102337667A discloses a flame retardant and water-repellent textile containing flame retardant polyester fibre and a preparation method thereof wherein, weight content of bromine is ≤ 5 µg/g and weight content of fluoride content is ≤ 5 µg/g. However, this kind of textile is prepared through a functional finishing process by using non-halogen flame retardant agent and non-fluorine water-repellent agent; so that hand feeling is not comfortable, and functional finishing agent on it is easily to be washed off.

Patent CN101787579A discloses a kind of flame retardant polyester fibre, a preparation method and an apparatus thereof. The flame retardant polyester fibre is consisted by an internal layer and an outer layer. The internal layer material includes flame retardant PET resin and the outer layer material is PET resin. However, as the outer layer material is a kind of regular polyester, this kind of flame retardant polyester fibre is not hydrophobic; and as the flame retardant agent is in the internal layer, the flame retardant function is reduced.

In the literature [DATABASE WPI Week 198714 Thomson Scientific, London, GB; AN 1987-097855 & JP S62 45723 A (NIPPON ESTER CO LTD) 27 February 1987 (1987-02-27)], a flame resistant conjugate polyester fibre is disclosed. The conjugate polyester fibre is of the sheath/core type and the sheath component contains 1-30% owf. organic silicon cpd. selected from modified polyorganosiloxane cpd. and silane coupling agent. The conjugate polyester fibre may be concentric or eccentric. Core/sheath ratio is 5:95 to 95:5, pref. 20:80 to 80:20 by wt.

In JP2000008225(A), Kuramoto Takahiro et al disclose an elastic conjugate filament excellent in flame retardance. This conjugate filament is a sheath-core type fiber comprising a sheath part and a core part composed of a polyester-based block copolymer comprising an aromatic dicarboxylic acid as a main acid component and an aliphatic and/or an alicyclic dihydroxy compound as a main glycol component and further having a low- melting polymer segment having 400-6,000 molecular weight. A flame retardant is compounded in a larger amount in the sheath part than that in the core part.

### SUMMARY OF THE INVENTION

Therefore, a hydrophobic flame retardant fibre and method for preparing same are provided by the present invention. The fibre has both of good hydrophobic and flame retardant functions, and also has washing resistance and increased performance time. The hand feeling is comfortable so that the fibre is suitable to be weaved into clothes. The preparation method of the fibre includes a skin-core composite spinning process, which can make hydrophobic and flame retardant property mutually complemented or strengthen, and the manufacturing process is easy and suitable to be industrialized.

According to an embodiment of the present invention, a hydrophobic flame retardant fibre is provided with a skin-core structure, wherein, the volume ratio of skin to core is in a range of 2:8-6:4; wherein, weight percentages of compositions of skin layer material comprise: 79.9%-88.8% of PET (polyethylene terephthalate), 8%-13% of PVDF (polyvinylidene fluoride), 3%-6% of flame retardant agent, 0.1%-0.5% of compatibilizer, 0.1%-0.6% of coupling agent; wherein, the melt index (MI) of the PVDF in the skin layer material is in 18-45; the compatibilizer in the skin layer material is selected from acrylate grafted polyolefin elastomer and maleic anhydride grafted polyolefin elastomer; the coupling agent is a 1:1 mixture of paraffin and any one selected from isopropyl triisostearoyltitanate, tris(dodecylbenzenesulfonato) tetraisopropyl titanate, isopropyl tri (dioctylphosphato) titanate and isopropyl tri (dioctylpyrophosphato) titanate; wherein, weight percentages of compositions of core layer material comprise: 91%-95% of PET, 5%-9% of flame retardant agent; the flame retardant agent in the core layer material or the skin layer material is any one of
poly(sulfonyldiphenylene phenylphosphonate), aryl polyphosphate poly p-phenylene phenylphosphate and poly diphenyl sulfone phenylphosphate ).

According to an embodiment of the present invention, a method for preparing a hydrophobic flame retardant fibre provided includes:
(1) Preparing flame retardant chips; wherein, the flame retardant agent and a part of dried PET in the compositions of the skin layer material are thoroughly mixed to obtain a mixture, and the mixture is squeezed out and granulated by a double screw extruder at a temperature in 255°C-260°C to obtain the flame retardant chips; the weight percentage of the flame retardant agent in the flame retardant chips is 6% - 9%;
(2) Preparing the skin layer material; wherein, the PVDF in the compositions of the skin layer material, the prepared flame retardant chips and the remaining part of PET which was remained after preparing the flame retardant chips are dried, and then are thoroughly mixed with the compatibilizer and the coupling agent according to the weight percentages of compositions in the skin layer material to obtain a mixture; the mixture is squeezed out and granulated by a double screw extruder at a temperature in 255 °C -260°C to obtain the skin layer material;
(3) Preparing the core layer material; wherein, the PET and the flame retardant agent are thoroughly mixed with reference to the weight percentages of compositions in the core layer material to obtain a mixture, and then the mixture is squeezed out and granulated by a double screw extruder at a temperature in 260 °C -265 °C to obtain the core layer material;
(4) Winding the skin layer material and the core layer material at a volume ratio of 2:8-6:4 to form undrawn yarn, then drawing the undrawn yarn by a skin-core composite spinning machine to obtain the hydrophobic flame retardant fibre.

The hydrophobic flame retardant fibre provided by the present invention has both of good hydrophobic performance and good flame retardant performance. PVDF and flame retardant agent included in the skin layer can make the hydrophobic flame retardant fibre flame retardant and permanent hydrophobic ; flame retardant agent included in the core layer can make hydrophobic flame retardant fibre permanent flame retardant. Besides, the hydrophobic flame retardant fibre provided by the present invention is spinned after mixing or melting various materials and polymers, so that washing resistance and hand feeling are better than coated fibre, and the fibre is more suitable to be weaved into clothes. As using the preparation method provided by embodiments of the present invention, two kinds of materials with different performances are spanned into a skin-core structure, so that the hydrophobic flame retardant fibre is both hydrophobic and flame retardant, and the two properties are non-interfered and mutually complemented. Moreover, the composite spinning technology used is easy to be industrialized and the manufacturing cost is low.

### DETAILED DESCRIPTION OF THE INVENTION

The embodiments of the present invention are described more fully hereinafter with reference to the accompanying drawings.

In an embodiment of the present invention, a hydrophobic flame retardant fibre provided has a skin-core structure, wherein, the volume ratio of skin to core is in a range of 2:8-6:4. Specifically, weight percentages of compositions of the skin layer material include: 79.9%-88.8% of PET (polyethylene terephthalate), 8%-13% of PVDF (polyvinylidene fluoride), 3%-6% of flame retardant agent, 0.1%-0.5% of compatibilizer, 0.1%-0.6% of coupling agent; weight percentages of compositions of the core layer material include: 91%-95% of PET, 5%-9% of flame retardant agent.

The PET in the skin layer material is regular polyethylene glycol terephthalate, which is the same with that in the core layer material. The melt index (MI) of the PVDF in the skin layer material is in 18-45.

The flame retardant agent in the skin layer material may be selected from poly(sulfonyldiphenylene phenylphosphonate), aryl polyphosphate , poly - p-phenylene phenylphosphate and poly (p- diphenyl sulfone phenylphosphate).

The compatibilizer in the skin layer material may be selected from acrylate grafted polyolefin elastomer and maleic anhydride grafted polyolefin elastomer.

The coupling agent is a 1:1 mixture of paraffin and any one selected from isopropyl triisostearoyltitanate, tris(dodecylbenzenesulfonato) tetraisopropyl titanate, isopropyl tri (dioctylphosphato) titanate and isopropyl tri (dioctylpyrophosphato) titanate.

The flame retardant agent in the core layer material may be any one of poly(sulfonyldiphenylene phenylphosphonate). aryl polyphosphate, poly- p-phenylene phenylphosphate and poly (p- diphenyl sulfone phenylphosphate).

A method for preparing the hydrophobic flame retardant fibre is provided by an embodiment of the present invention. With the weight percentages of compositions provided by embodiments of the present invention, the method includes following processes: (1) flame retardant chips are prepared. Specifically, the flame retardant agent and a part of dried PET in the compositions of the skin layer material are thoroughly mixed to obtain a mixture, and the mixture is squeezed out and granulated by a double screw extruder at a temperature in 255°C-260°C to obtain the flame retardant chips. The weight percentage of the flame retardant agent in the flame retardant chips is 6% - 9%. (2) Skin layer material is prepared. Specifically, the PVDF in the compositions of the skin layer material, the prepared flame retardant chips and the remaining part of PET (which was remained after preparing the flame retardant chips) are dried, and then are thoroughly mixed with the compatibilizer and the coupling agent according to the weight percentages of compositions in the skin layer material to obtain a mixture. The mixture is squeezed out and granulated by a double screw extruder at a temperature in 255 °C -260 °C to obtain the skin layer material.

In the technical scheme of the present invention, the flame retardant chips are prepared via fusion and granulation process using the mixture of flame retardant agent and a part of dried PET in the compositions of the skin layer material, and the weight percentage of the flame retardant in the flame retardant chips is 6% - 9%. The remaining part of PET is dried and used for preparing the skin layer material. The two parts of PET constitutes the composition of PET in the skin layer material. In order to mix more uniformly, the flame retardant chips are prepared in advance and then mixed with other materials.
(3) Core layer material is prepared. Specifically, the PET and the flame retardant agent are thoroughly mixed with reference to the weight percentages of compositions in the core layer material to obtain a mixture, and then the mixture is squeezed out and granulated by a double screw extruder at a temperature in 260 °C -265 °C to obtain the core layer material.
(4) A hydrophobic flame retardant fibre with a skin-core structure is prepared. Specifically the skin layer material prepared in step (2) and the core layer material prepared in step (3) are winded at a volume ratio of 2:8-6:4 to form undrawn yarn. Then the undrawn yarn is drawn by a skin-core composite spinning machine to obtain the hydrophobic flame retardant fibre.

The volume ratio of skin to core may affect the flame retardant performance of the fibre. At high volume ratio of skin to core, the flame retardant function of the core layer material cannot perform obviously; and at low volume ratio of skin to core, the hydrophobic function may be affected. Therefore, the volume ratio of skin to core is required to be controlled in the described range, and the preferred volume ratio is in a range of 3:7-5:5. The drawing process of the fibre may be a conventional drawing process or a regular drawing process, and the length of the fibre is drawn to 3-5 times. After a testing process, the hydrophobic angle of the fibre is in 86-90 and the limiting oxygen index of the fibre is in 27-29. So the fibre is named as hydrophobic flame retardant fibre. The strength index and other physical index of the fibre also meet the requirements of regular fibre.

In an embodiment of the present invention, the hydrophobic flame retardant fibre is prepared by following processes.

60.7kg of dried PET and 6kg of poly(sulfonyldiphenylene phenylphosphonate) are thoroughly mixed to obtain a mixture, and the mixture is squeezed out and granulated by a double screw extruder at a temperature of 255°C to obtain 66.7kg of flame retardant chips.

19.2kg of dried PET, 13kg of PVDF(whose MI is 45), 66.7kg of dried flame retardant chips, 0.5kg of acrylate grafted polyolefin elastomer, 0.3kg of isopropyl triisostearoyltitanate and 0.3kg of paraffin are thoroughly mixed to obtain a mixture, and the mixture is squeezed out and granulated by a double screw extruder at a temperature of 255°C to obtain skin layer material.

91kg of dried PET and 9kg of poly(sulfonyldiphenylene phenylphosphonate) are thoroughly mixed to obtain a mixture, and the mixture is squeezed out and granulated by a double screw extruder at a temperature of 260 °C to obtain core layer material.

Finally, the skin layer material and the core layer material are winded at a volume ratio of 2:8 to form undrawn yam by a skin-core composite spinning machine, and the length of the undrawn yam is drawn to 3 times at a temperature of 120°C to obtain hydrophobic flame retardant fibre.

It is tested that the hydrophobic angle of the fibre is 90 and the limiting oxygen index of the fibre is 29.

In another embodiment of the present invention, the hydrophobic flame retardant fibre is prepared by following processes.

47kg of dried PET and 3kg of aryl polyphosphate are thoroughly mixed to obtain a mixture, and the mixture is squeezed out and granulated by a double screw extruder at a temperature of 260 DC to obtain 50kg of flame retardant chips.

41.8kg of dried PET, 8kg of PVDF (whose MI is 18), 50kg of dried flame retardant chips, O.1kg of maleic anhydride grafted polyolefin elastomer, 0.05kg of tris(dodecylbenzenesulfonato) tetraisopropyl titanate and 0.05kg of paraffin are thoroughly mixed to obtain a mixture, and the mixture is squeezed out and granulated by a double screw extruder at a temperature of 260 °C to obtain skin layer material.

95kg of dried PET and 5kg of aryl polyphosphate are thoroughly mixed to obtain a mixture, and the mixture is squeezed out and granulated by a double screw extruder at a temperature of 265 °C to obtain core layer material.

Finally, the skin layer material and the core layer material are winded at a volume ratio of 6:4 to form undrawn yam by a skin-core composite spinning machine, and the length of the undrawn yam is drawn to 3.5 times at a temperature of 120°C to obtain hydrophobic flame retardant fibre.

In this embodiment, the hydrophobic angle of the fibre is 86 and the limiting oxygen index is 27. In another embodiment of the present invention, the hydrophobic flame retardant fibre is prepared by following processes.

57.5kg of dried PET and 5kg of poly(p-phenylene phenylphosphate ) are thoroughly mixed to obtain a mixture, and the mixture is squeezed out and granulated by a double screw extruder at a temperature of 255°C to obtain 62.5kg of flame retardant chips.

24.6kg of dried PET, 12kg of PVDF (whose MI is 35), 62.5kg of dried flame retardant chips, 0.4kg of acrylate grafted polyolefin elastomer, 0.25kg of isopropyl tri (dioctylphosphato) titanate and 0.25kg of paraffin are thoroughly mixed to obtain a mixture, and the mixture is squeezed out and granulated by a double screw extruder at a temperature of 255°C to obtain skin layer material. 92kg of dried PET and 8kg of poly(sulfonyldiphenylene phenylphosphonate) are thoroughly mixed to obtain a mixture, and the mixture is squeezed out and granulated by a double screw extruder at a temperature of 260 °C to obtain core layer material.

Finally, the skin layer material and the core layer material are winded at a volume ratio of 3:7 to form undrawn yam by a skin-core composite spinning machine, and the length of the undrawn yam is drawn to 4 times at a temperature of 120°C to obtain hydrophobic flame retardant fibre.

In this embodiment, the hydrophobic angle of the fibre is 89 and the limiting oxygen index of the fibre is 29.

In another embodiment of the present invention, the hydrophobic flame retardant fibre is prepared by following processes.

53.2kg of dried PET and 4kg of poly (p- diphenyl sulfone phenylphosphate ) are thoroughly mixed to obtain a mixture, and the mixture is squeezed out and granulated by a double screw extruder at a temperature of 255 °C to obtain 57.2kg of flame retardant chips.

32.1kg of dried PET, 10kg of PVDF (whose MI is 30), 57.2kg of dried flame retardant chips, 0.3kg of maleic anhydride grafted polyolefin elastomer, 0.2kg of isopropyl tri(dioctylpyrophosphato) titanate and 0.2kg of paraffin are thoroughly mixed to obtain a mixture, and the mixture is squeezed out and granulated by a double screw extruder at a temperature of 255 °C to obtain skin layer material.

91kg of dried PET and 9kg of poly(sulfonyldiphenylene phenylphosphonate) are thoroughly mixed to obtain a mixture, and the mixture is squeezed out and granulated by a double screw extruder at a temperature of 265 °C to obtain core layer material.

Finally, the skin layer material and the core layer material are winded at a volume ratio of 4:6 to form undrawn yam by a skin-core composite spinning machine, and the length of the undrawn yam is drawn to 4.5 times at a temperature of 120°C to obtain hydrophobic flame retardant fibre.

In this embodiment, the hydrophobic angle of the fibre is 88 and the limiting oxygen index of the fibre is 28.

In another embodiment of the present invention, the hydrophobic flame retardant fibre is prepared by following processes.

62.7kg of dried PET and 4kg of poly (p- diphenyl sulfone phenylphosphate ) are thoroughly mixed to obtain a mixture, and the mixture is squeezed out and granulated by a double screw extruder at a temperature of 260°C to obtain 66.7kg of flame retardant chips.

23.8kg of dried PET, 9kg of PVDF (whose MI is 25), 66.7kg of dried flame retardant chips, 0.2kg of acrylate grafted polyolefin elastomer, 0.15kg of isopropyl triisostearoyltitanate and 0.15kg of paraffin are thoroughly mixed to obtain a mixture, and the mixture is squeezed out and granulated by a double screw extruder at a temperature of 255°C to obtain skin layer material.

92kg of dried PET and 8kg of poly(sulfonyldiphenylene phenylphosphonate) are thoroughly mixed to obtain a mixture, and the mixture is squeezed out and granulated by a double screw extruder at a temperature of 265°C to obtain core layer material.

Finally, the skin layer material and the core layer material are winded at a volume ratio of 5:5 to form undrawn yarn by a skin-core composite spinning machine, and the length of the undrawn yarn is drawn to 5 times at a temperature of 120°C to obtain hydrophobic flame retardant fibre.

In this embodiment, the hydrophobic angle of the fibre is 87 and the limiting oxygen index of the fibre is 28.

## Claims

1. A hydrophobic flame retardant fibre with a skin-core structure, wherein, the volume ratio of skin to core is in a range of 2:8 -6:4;
wherein, weight percentages of compositions of skin layer material comprise: 79.9%-88.8% of PET, 8%-13% of PVDF, 3%-6% of flame retardant agent, 0.1%-0.5% of compatibilizer, 0.1%-0.6% of coupling agent;
wherein, weight percentages of compositions of core layer material comprise: 91%-95% of PET, 5%-9% of flame retardant agent.

2. The hydrophobic flame retardant fibre of Claim 1, wherein, the compatibilizer is selected from acrylate grafted polyolefin elastomer and a maleic anhydride grafted polyolefin elastomer.

3. The hydrophobic flame retardant fibre of any of Claims 1-2, wherein, the coupling agent is a 1:1 mixture of paraffin and any one selected from isopropyl triisostearoyltitanate, tris(dodecylbenzenesulfonato) tetraisopropyl titanate, isopropyl tri (dioctylphosphato) titanate and isopropyl tri (dioctylpyrophosphato) titanate by weight percentage.

4. The hydrophobic flame retardant fibre of any of Claims 1-3, wherein, the flame retardant agent in the skin layer material and in the core layer material is independently selected from poly(sulfonyldiphenylene phenylphosphate), aryl polyphosphate, poly(p-phenylene phenylphosphate) and poly (p-sulfonediphenyl phenylphosphate).

5. The hydrophobic flame retardant fibre of any of Claims 1-4, wherein, the volume ratio of skin to core is in a range of 3:7-5:5.

6. A method for preparing a hydrophobic flame retardant fibre, comprising:
preparing flame retardant chips;
preparing skin layer material; wherein weight percentages of compositions of skin layer material comprise: 79.9%-88.8% of PET, 8%-13% of PVDF, 3%-6% of flame retardant agent, 0.1%-0.5% of compatibilizer, 0.1%-0.6% of coupling agent;
preparing core layer material; wherein weight percentages of compositions of core layer material comprise: 91%-95% of PET, 5%-9% of flame retardant agent;
using the skin layer material and the core layer material to form undrawn yarn, and drawing the undrawn yarn by a skin-core composite spinning machine to obtain the hydrophobic flame retardant fibre.

7. The preparation method of Claim 6, wherein, preparing flame retardant chips comprises:
mixing flame retardant agent and a part of dried PET in the compositions of the skin layer material to obtain a mixture;
squeezing out and granulating the mixture by a double screw extruder at a temperature in 255°C-260°C to prepare the flame retardant chips; wherein, the weight percentage of the flame retardant agent in the flame retardant chips is 6%- 9%.

8. The preparation method of Claim 6 or 7, wherein, preparing the skin layer material comprises:
drying the PVDF in the compositions of the skin layer material, the prepared flame retardant chips and the remaining PET in the compositions of the skin layer material;
mixing the PVDF, the prepared flame retardant chips and the remaining PET with compatibilizer and coupling agent to obtain a mixture;
squeezing out and granulating the mixture by a double screw extruder at a temperature in 255°C-260°C to obtain the skin layer material.

9. The preparation method of any of Claims 6-8, wherein, preparing the core layer material comprises:
mixing the PET and the flame retardant agent to obtain a mixture;
squeezing out and granulating the mixture by a double screw extruder at a temperature in 260°C-265°C to obtain the core layer material.

## Patentansprüche

1. Hydrophobe flammhemmende Faser mit einer Überzug-Kern-Struktur, wobei das Volumenverhältnis von Überzug zu Kern in einem Bereich von 2:8 bis 6:4 liegt;
wobei Gewichtsprozente von Zusammensetzungen von Überzugsschichtmaterial Folgendes enthalten: 79,9 % bis 88,8 % PET, 8 % bis 13 % PVDF, 3 % bis 6 % Flammhemmer, 0,1 % bis 0,5 % Verträglichkeitsvermittler, 0,1 % bis 0,6 % Kopplungsvermittler;
wobei Gewichtsprozente von Zusammensetzungen von Kernschichtmaterial Folgendes enthalten: 91 % bis 95 % PET, 5 % bis 9 % Flammhemmer.

2. Hydrophobe flammhemmende Faser nach Anspruch 1, wobei der Verträglichkeitsvermittler unter Acrylat-gepfropftem Polyolefinelastomer und einem Maleinanhydrid-gepfropftem Polyolefinelastomer ausgewählt ist.

3. Hydrophobe flammhemmende Faser nach einem der Ansprüche 1-2, wobei der Kopplungsvermittler ein 1:1-Gemisch (nach Gewichtsprozent) aus Paraffin und einem von Folgendem ist: Isopropyl-tri-isostearoyl-titanat, Tris(dodecylbenzensulfonato)-tetra-isopropyl-titanat, Isopropyl-tri(dioctylphosphato)-titanat, und Isopropyl-tri(dioctylpyrophosphato)-titanat.

4. Hydrophobe flammhemmende Faser nach einem der Ansprüche 1-3, wobei der Flammhemmer in dem Überzugsschichtmaterial und in dem Kernschichtmaterial unabhängig unter Poly(sulfonyldiphenylen-phenylphosphonat), Arylpolyphosphat, Poly-p-phenylen-phenylphosphat und Poly(p-diphenyl-sulfon-phenylphosphat) ausgewählt ist.

5. Hydrophobe flammhemmende Faser nach einem der Ansprüche 1-4, wobei das Volumenverhältnis von Überzug zu Kern in einem Bereich von 3:7 bis 5:5 liegt.

6. Verfahren zur Herstellung einer hydrophoben flammhemmenden Faser, das Folgendes umfasst:
Herstellen flammhemmender Späne;
Herstellen eines Überzugsschichtmaterials, wobei Gewichtsprozente von Zusammensetzungen von Überzugsschichtmaterial Folgendes enthalten: 79,9 % bis 88,8 % PET, 8 % bis 13 % PVDF, 3 % bis 6 % Flammhemmer, 0,1 % bis 0,5 % Verträglichkeitsvermittler, 0,1 % bis 0,6 % Kopplungsvermittler;
Herstellen eines Kernschichtmaterials, wobei Gewichtsprozente von Zusammensetzungen von Kernschichtmaterial Folgendes enthalten: 91 %-95 % PET, 5 %-9 % Flammhemmer;
Verwenden des Überzugsschichtmaterials und des Kernschichtmaterials zum Bilden eines nicht-gezogenen Garns und Ziehen des nichtgezogenen Garns durch eine Überzug-Kern-Verbundspinnmaschine, um die hydrophobe flammhemmende Faser zu erhalten.

7. Herstellungsverfahren nach Anspruch 6, wobei das Herstellen flammhemmender Späne Folgendes umfasst:
Vermischen von Flammhemmer und einem Teil von getrocknetem PET in den Zusammensetzungen des Überzugsschichtmaterials, um ein Gemisch zu erhalten;
Herausquetschen und Granulieren des Gemisches durch einen Doppelschneckenextruder bei einer Temperatur im Bereich von 255 °C bis 260 °C zum Herstellen der flammhemmenden Späne;
wobei der Gewichtsprozentsatz des Flammhemmers in den flammhemmenden Späne 6 % bis 9 % beträgt.

8. Herstellungsverfahren nach Anspruch 6 oder 7, wobei das Herstellen des Überzugsschichtmaterials Folgendes umfasst:
Trocknen des PVDF in den Zusammensetzungen des Überzugsschichtmaterials, den hergestellten flammhemmenden Spänen und dem verbleibenden PET in den Zusammensetzungen des Überzugsschichtmaterials;
Vermischen des PVDF, der hergestellten flammhemmenden Späne und des verbleibenden PET mit Verträglichkeitsvermittler und Kopplungsvermittler, um ein Gemisch zu erhalten;
Herausquetschen und Granulieren des Gemisches durch einen Doppelschneckenextruder bei einer Temperatur im Bereich von 255 °C bis 260 °C, um das Überzugsschichtmaterial zu erhalten.

9. Herstellungsverfahren nach einem der Ansprüche 6-8, wobei das Herstellen des Kernschichtmaterials Folgendes umfasst:
Vermischen des PET und des Flammhemmers, um ein Gemisch zu erhalten;
Herausquetschen und Granulieren des Gemisches durch einen Doppelschneckenextruder bei einer Temperatur im Bereich von 260 °C bis 265 °C, um das Kernschichtmaterial zu erhalten.

## Revendications

1. Fibre ignifuge hydrophobe à structure peau-coeur, dans laquelle le rapport en volume de la peau au coeur est dans une plage de 2:8 à 6:4 ;
dans laquelle, les compositions en pourcentages en poids du matériau de couche de peau comprennent : de 79,9 à 88,8 % de PET, de 8 à 13 % de PVDF, de 3 à 6 % d'agent ignifuge, de 0,1 à 0,5 % d'agent de compatibilisation, et de 0,1 à 0,6 % d'agent de couplage ;
dans laquelle, les compositions en pourcentages en poids du matériau de couche de coeur comprennent : de 91 à 95 % de PET, et de 5 à 9 % d'agent ignifuge.

2. Fibre ignifuge hydrophobe selon la revendication 1, dans laquelle l'agent de compatibilisation est choisi parmi un élastomère de polyoléfine greffé avec un acrylate et un élastomère de polyoléfine greffé avec un anhydride maléique.

3. Fibre ignifuge hydrophobe selon l'une quelconque des revendications 1 à 2, dans laquelle l'agent de couplage est un mélange 1:1 en pourcentage en poids de paraffine et d'un composé quelconque choisi parmi le triisostéaroyltitanate d'isopropyle, le titanate de tris(dodécylbenzènesulfonato)-tétraisopropyle, le tri(dioctylphosphato)titanate d'isopropyle et le tri(dioctylpyrophosphato)titanate d'isopropyle.

4. Fibre ignifuge hydrophobe selon l'une quelconque des revendications 1 à 3, dans laquelle l'agent ignifuge dans le matériau de couche de peau et dans le matériau de couche de coeur est indépendamment choisi parmi le phénylphosphonate de poly(sulfonyldiphénylène), le polyphosphate d'aryle, le phénylphosphate de poly-p-phénylène, et le phénylphosphonate de poly(p-diphénylsulfone).

5. Fibre ignifuge hydrophobe selon l'une quelconque des revendications 1 à 4, dans laquelle le rapport en volume de la peau au coeur est dans une plage de 3:7 à 5:5.

6. Procédé de préparation d'une fibre ignifuge hydrophobe, comprenant :
la préparation de granules ignifuges ;
la préparation du matériau de couche de peau, dans laquelle les compositions en pourcentages en poids du matériau de couche de peau comprennent : de 79,9 à 88,8 % de PET, de 8 à 13 % de PVDF, de 3 à 6 % d'agent ignifuge, de 0,1 à 0,5 % d'agent de compatibilisation, et de 0,1 à 0,6 % d'agent de couplage ;
la préparation du matériau de couche de coeur, dans laquelle les compositions en pourcentages en poids du matériau de couche de coeur comprennent : de 91 à 95 % de PET, et de 5 à 9 % d'agent ignifuge ;
l'utilisation du matériau de couche de peau et du matériau de couche de coeur pour former un fil non étiré, et l'étirage du fil non étiré par une machine à filer les composites peau-coeur pour obtenir la fibre ignifuge hydrophobe.

7. Procédé de préparation selon la revendication 6, dans lequel la préparation des granules ignifuges comprend :
le mélange de l'agent ignifuge et d'une partie du PET séché dans les compositions du matériau de couche de peau pour obtenir un mélange ;
la compression et la granulation du mélange par une extrudeuse bi-vis à une température de 255 à 260 °C pour obtenir les granules ignifuges ;
dans lequel le pourcentage en poids d'agent ignifuge dans les granules ignifuges est de 6 à 9 %.

8. Procédé de préparation selon la revendication 6 ou 7, dans lequel la préparation du matériau de couche de peau comprend :
le séchage du PVDF dans les compositions du matériau de couche de peau, des granules ignifuges préparés et du PET restant dans les compositions du matériau de couche de peau ;
le mélange du PVDF, des granules ignifuges préparés et du PET restant avec l'agent de compatibilisation et l'agent de couplage pour obtenir un mélange ;
la compression et la granulation du mélange par une extrudeuse bi-vis à une température de 255 à 260 °C pour obtenir le matériau de couche de peau.

9. Procédé de préparation selon l'une quelconque des revendications 6 à 8, dans lequel la préparation du matériau de couche de coeur comprend :
le mélange du PET et de l'agent ignifuge pour obtenir un mélange ;
la compression et la granulation du mélange par une extrudeuse bi-vis à une température de 260 à 265 °C pour obtenir le matériau de couche de coeur.
